# EUROPEAN PATENT SPECIFICATION

(11) **EP 1 990 178 B1**
(45) Date of publication and mention of the grant of the patent: **21.07.2010**
(21) Application number: 07009187.1
(22) Date of filing: 07.05.2007
(51) Int. Cl.: B29C 70/54, B29L 31/08, B29L 9/00

(54) **Method for producing a wind turbine rotor blade**
Verfahren zur Herstellung eine Windturbinenschaufel
Procédé de production d'une pale d'éolienne

(43) Date of publication of application: 12.11.2008
(73) Proprietor: SIEMENS AKTIENGESELLSCHAFT, 80333 München (DE)
(72) Inventor: Stiesdal, Henrik, 5000 Odense C (DK)

(56) References cited:
- WO-A-02/058915
- WO-A-2005/121430
- WO-A-2007/038930
- FR-A- 2 870 861
- FR-A1- 2 605 929
- GB-A- 2 381 493
- US-A- 5 484 642
- US-A1- 2003 077 965
- US-A1- 2004 017 020
- US-A1- 2005 037 678

## Description

The present invention relates to a method of producing a wind turbine rotor blades, by placing a number of dry fibre reinforcement layers on top of each other in a mould, injecting a curable viscose or liquid polymer into the mould after the fibre reinforcement layers have been placed in the mould and curing the polymer.

In such methods of producing fibre reinforced laminated structures it is of importance to ensure sufficient wetting of the dry reinforcement layers after they have been placed in the mould. If the wetting is insufficient, this may lead to delamination and air pockets within the laminate structure and, as a consequence, to wrinkles in the laminate structure which constitute weak points of the structure. This deficiency is in particular an issue in case of thick fibre reinforced laminated structures such as; e.g. spar caps of wind turbine rotor blades.

In order to address this issue it has been proposed in US 2007/0040294 A1 to use a number of prefabricated laminate structures which are placed on top of each other to form the spar caps as well as the front and rear ends of a wind turbine rotor blade. The overall construction of the blade disclosed in US 2007/0040294 A1 comprises sandwiched structures which are formed conventionally and laminated structures which are formed by parts of the prefabricated laminate structures. Thus, the upper and lower shells of the blade are each composed of sections made of different material. The contact points between the sections made of different material can constitute weak points of the blade.

WO 2007/038930 A1 describes a method for producing a fibre-reinforced product in which one or more layers of reinforcing fibres are placed in a mould together with at least one porous layer and a resin for distribution through the porous member to the fibre layers is introduced. The porous member may, in particular, be placed so as to form an inner layer and may have a sheet structure in the form of a knitted, woven, needled a crocheted foamed or filter-like material. The product may in particular be a part of a shell of a wind turbine blade.

US 2005/0037678 A1 describes open grid fabric resin infusion media and reinforcing composite lamina. The open grid fabrics serve as an interlamina infusion medium that significantly improves the speed, uniformity and ability to quality-control the transfer, delivery and distribution of matrix resin (plastic) throughout the laminates stack. The open grid fabric refers to knitted or woven fabrics. The open grid fabric can be sandwiched in the middle and/or placed on either or both sides of the laminate schedule.

US 2003/0077965 A1 describes three-dimensional spacer fabric resin infusion media and reinforcing composite lamina. The spaceer of fabric infusion media can be sandwiched in the middle and/or placed on either or both ends of the laminate schedule to promote rapid and uniform distribution on all sides of the dry laminate.

US 2004/0017020 A1 describes a process for fibreglass moulding using a vacuum. A non-absorbent porous layer is positioned between fibre glass resin absorber layers and is woven to provide a wave which defines passages for the resin to travel. The non-absorbent layer may be a weave of non-absorbent fibres or solid core including wood having grooves channels or holes throughout the surface and foam having grooves, channels or holes throughout the surface. Furthermore, metal woven from fibres or having grooves, channels or holes throughout the surface is also mentioned, as are plastic woven fibres. WO 2005/121430 A2 describes a multi layer construction that can be used a reinforcement in a part obtained by resin transfer moulding. It comprises a core layer consisting of an open work structure having a special undulation and is made of high tenacity yarns. The yarns can be made from aramide, carbon, glass, or metal fibres.

FR 2 870 861 A1 describes a textile laminate to be integrated in the structure of a moulded article realized by infusing of resin. The textile laminate combines at least one layer of reinforcing textile construction and at least one drainage layer formed by an open work construction capable of forming a preferential passage area for the resin during the infusion. The reinforcing layer and the drainage layer a mechanically joined by means of a bonding interface of the type that permits the laminate to remain deformable.

US 5,484,642, which corresponds to FR 2 605 929 A1 describes a textile material useful for producing composite laminated articles by injection moulding. The injection moulding technique involves arranging a stack of layers of textile reinforcement in the mould having a shape that corresponds to that of the article to be obtained and after the mould has been closed, and injecting a resin into it. At least one layer of the stack of textile reinforcement has a structure in which ducts extend in at least one direction in the stack for improving the flow of the resin flowing injection.

GB 2 381 493 A describes composite materials in which a flow medium for enhancing the flow of a liquid through the composite, is present between carbon fabrics.

WO 02/058915 A1 describes a core material for fibre reinforced resin composite structure that has slits on its surface and through holes which pass through it in thickness direction.

It is therefore and objective of the present invention to provide a method of producing fibre reinforced laminated structures which overcome the above-mentioned problems.

This objective is solved by a method of producing fibre reinforced laminated structures as claimed in claim 1. The depending claims define further developments of the invention.

By using such flow enhancing layers it is possible to ensure sufficient wetting of all fibre reinforcement layers even in thick layer stacks. Therefore, the risk of delamination and air pockets, which would lead to wrinkles, is highly reduced. Moreover, the laminated structure can be made of a continuous structure without points where different structures abut each other.

In particular, if thick fibre reinforced laminated structures are to be produced, one may create a stack comprising a number of fibre reinforcement layers and then lay at least one flow-enhancing layer on top of the stack when layering the number of dry fibre reinforcement layers. This offers the possibility of forming stacks of fibre reinforcement layers without a flow-enhancing layer up to a thickness for which sufficient wetting can be ensured without a flow-enhancing layer so that the overall number of flow-enhancing layers can be kept small. In particular, a number of stacks and a number of flow-enhancing layers can be layered such that stacks and flow-enhancing layers alternate. The flow-enhancing layers then ensure that a sufficient amount of polymer can flow between different stacks of fibre reinforcement layers for sufficiently wetting all fibre reinforcement layers of the stacks.

In addition, a flow-enhancing layer may be placed as the lowermost layer and/or a flow-enhancing layer may be placed as the uppermost layer of the laminated structure to facilitate polymer flow at the bottom and the top of the layered structure in the mould.

According to the invention, the flow enhancing layer is a pre-cured solid layer. This ensures that its flow-enhancing property is maintained even if pressure is applied to the layers during infusion of the polymer or a vacuum is present during infusion. If the flow-enhancing layer has too high a compressibility, there could be a risk of reducing its flow-enhancing properties too much when applying pressure or vacuum.

Although the same material may be used for the flow-enhancing layers as is used for the fibre reinforcement layers, it may be advantageous if a different material is used for forming the flow-enhancing layers. This offers the possibility of providing a desired stiffness ratio of the flow-enhancing layers to the fibre reinforcement layers after curing the resin.

In addition, in particular the perforated layers may be corrugated to increase the space available for polymer flow.

The inventive method is used to produce wind turbine rotor blades as fibre reinforced laminated structures.

Further features, properties and advantages of the present invention will become clear from the following description of an embodiment of the invention in conjunction with the accompanying drawings.

Figure 1 schematically shows a section through a laminated wind turbine rotor blade.

Figure 2 shows a detail of Figure 1.

Figure 3 schematically shows a first stage in the process of producing a rotor blade according to Figure 1.

Figure 4 shows a second stage in the process of producing a rotor blade according to Figure 1.

Figure 5 shows a third stage in the process of producing a rotor blade according to Figure 1.

Figure 6 shows a first example of a flow-enhancing layer used in the process of producing a rotor blade as shown in Figure 1 in a top view.

Figure 7 shows the flow-enhancing layer of Figure 6 in a sectional view.

Figure 8 shows a second example for a flow-enhancing layer.

Figure 9 shows the flow-enhancing layer of Figure 8 in a sectional view.

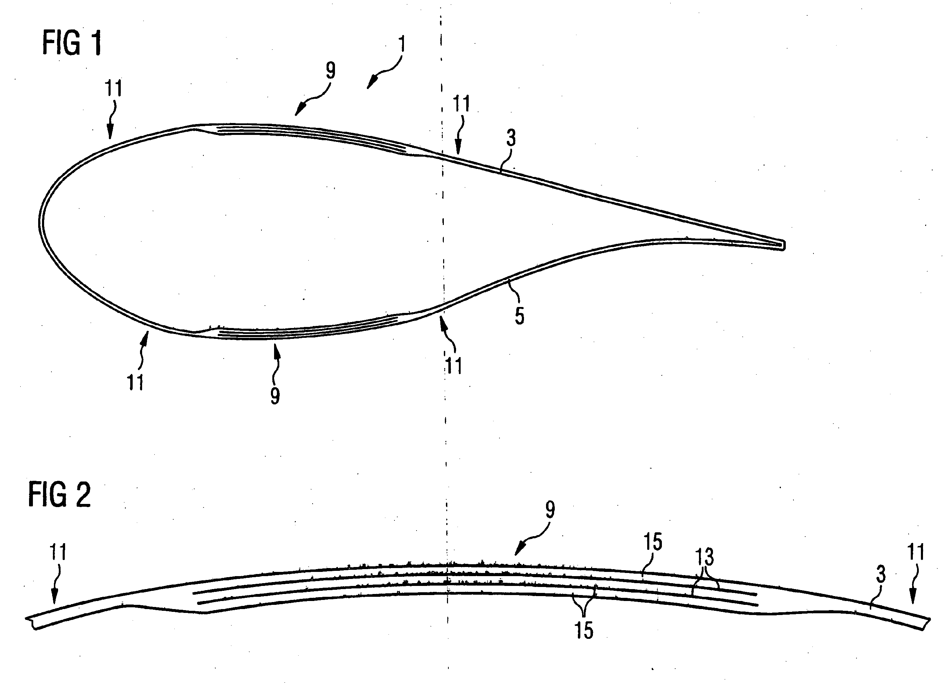

Figure 1 is a schematic view of the cross-section of a laminated wind turbine rotor blade 1. The rotor blade 1 is made of an upper shell 3 and a lower shell 5 each comprising a thickened section 9 and non thickened sections 11. The upper and lower shells 3, 5 comprise a number of fibre reinforcement layers which are not individually shown in the figure. In the thickened section 9 the number of reinforcement layers is increased with respect to the non-thickened sections 11.

The thickened section 9 of the upper shell 3 is shown in more detail in Figure 2. In the thickened section 9, flow-enhancing layers 13 are present between stacks of fibre reinforcement layers 15. The fibre reinforcement layers 15, as well as the flow-enhancing layers 13, are embedded in a resin matrix which has been formed by resin infusion and subsequent curing of the resin. During the infusion process the flow-enhancing layers 13 layered between neighbouring stacks 15 of the fibre reinforcement layers ensure sufficient resin flow between the stacks 15 so that a sufficient wetting of all fibre reinforcement layers in the stacks 15 is achieved.

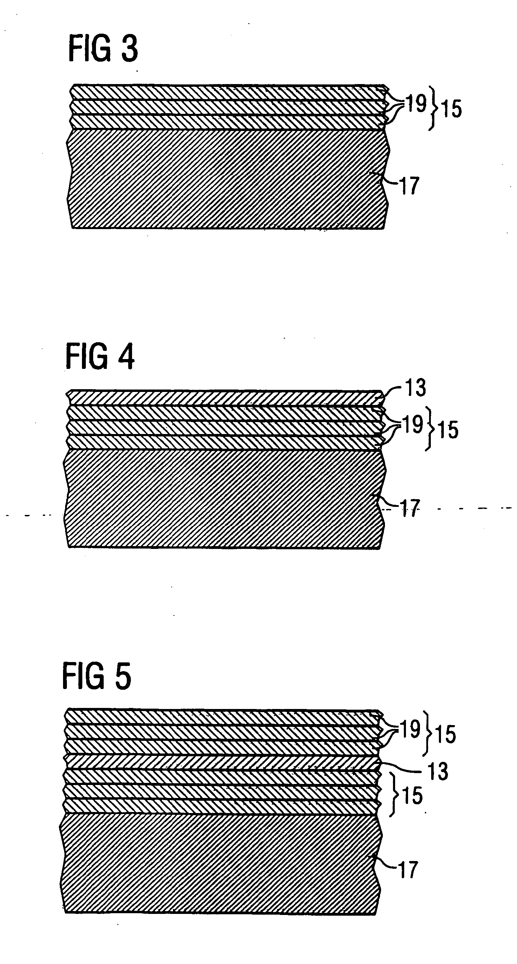

The method of forming the wind turbine rotor blade 1 shown in Figures 1 and 2 will now be described with respect to Figures 3 to 5. In general, the upper and lower shells 3, 5 of the rotor blade 1 are produced by placing dry fibre reinforcement layers on top of each other in a mould, wetting the fibre reinforcement layers by means of a resin infusion and subsequently curing the resin. Please note that although described with respect to producing a wind turbine rotor blade 1, the method which will be described with respect to Figures 3 to 5 can also be used for producing other fibre reinforced laminated structures, e.g. in boat building.

A first stage of the method for producing the rotor blade 1 shown in Figure 1 is shown in Figure 3. The figure schematically shows a cut-out sectional view of the mould 17 and a number of fibre reinforcement layers 19, e.g. glass fibre layers, carbon fibre layers or aramid fibre layers, which are placed dry in the mould 17 on top of each other so as to form a stack 15 of the fibre reinforcement layers 19.

After a stack 15 of fibre reinforcement layers has been placed in the mould 17 a flow-enhancing layer 13 is placed on top of the stack 15 (see Figure 4).

After the flow-enhancing layer 13 has been placed on top of the first stack 15 of fibre reinforcement layers 19, another stack 15 comprising a number of fibre reinforcement layers 19 is placed on top of the flow-enhancing layer 13, as shown in Figure 5.

Alternately layering stacks 15 of fibre reinforcement layers 19 and flow-enhancing layers 13 can be continued until the desired thickness of the layering is reached. The number of fibre reinforcement layers 19 can be as high as possible without negatively influencing the wetting of all fibre reinforcement layers 19 within a stack 15.

Although not shown in Figure 3 to 5, additional flow-enhancing layers 13 may be present under the lowermost stack 15 of fibre reinforcement layers 19. In this case, a flow-enhancing layer 13 would be the first layer placed in the mould 17. The outermost layer of the overall stack consisting of stacks 15 of fibre reinforcement layers 19 alternating with flow-enhancing layers 13 may also be a flow-enhancing layer 13.

After the layering of the dry fibre reinforcement layers 19 and the dry flow-enhancing layers 13, the mould 17 is closed and a vacuum is applied to the mould. Then, a resin, e.g. a polyester resin or an epoxy resin, is infused into the evacuated mould. The resin wets the fibre reinforcement layers thereby using the flow-enhancing layers 13 as flow paths which allow for the distribution of the resin throughout the thick overall stack. After a while all fibre reinforcement layers 19, and also all flow-enhancing layers 13, are sufficiently wetted. Then, the resin is cured. After curing the resin, the mould 17 is dismantled.

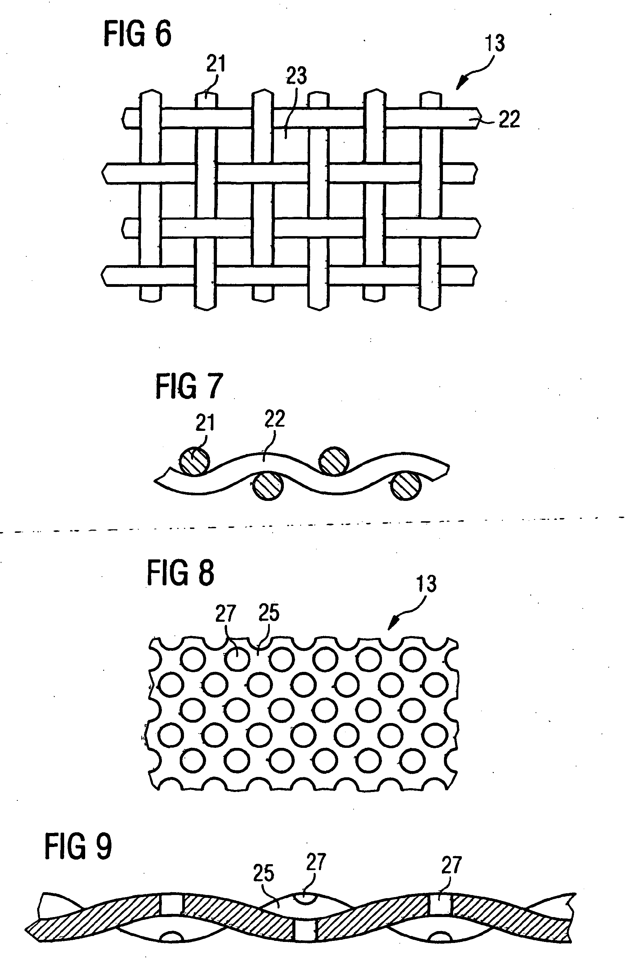

Examples of flow-enhancing layers 13 that may be used in the described method are shown in Figures 6 to 9.

Figures 6 and 7 show a flow-enhancing layer 13 which is implemented as a woven mat. While Figure 6 shows a top view onto the mat, Figure 7 shows a sectional view through the mat. As can be seen from the figures, threads 21, 22 of the woven structure provide space for a resin flow through the flow enhancing layer 13 above and below the threads 21, 22. Moreover, resin can flow through openings 23 between neighbouring threads from one side of the woven mat to the other. Therefore, the permeability of this woven mat is much higher than that of the fibre reinforcement layers 19.

The woven mat may be made from the same material as the fibre reinforcement layers 19. In addition, the woven mat is pre-cured so as to be inherently stable. This prevents the reduction of flow space for the resin by preventing compression of the woven mat when the vacuum is applied to the mould. In the present embodiment of the invention the woven mat is made from a glass fibre epoxy laminate.

Figures 8 and 9 show a flow-enhancing layer 13 which is implemented as a corrugated metal plate 25. The flow enhancing layer shown in Figures 8 and 9 is not part of the present invention. While Figure 8 shows a top view onto the corrugated metal plate 25, Figure 9 shows a sectional view through the plate 25. Although the corrugation alone would be sufficient for providing flow space for the resin to flow through the flow enhancing layer 13, the flow can further be enhanced by providing perforating holes 27 in the corrugated metal plate 25, as shown in Figures 8 and 9. Through the holes 27 resin may easily flow from one side of the corrugated metal plate 25 to the other. Although shown as being located at the highest and lowest points of the corrugated metal plate 25, holes 27 may additionally or alternatively be present between these locations.

Although not explicitly mentioned, materials other than the material the fibre reinforcement layers 19 are made of or metal can be used as a material for the flow-enhancing layers 13. By using selected materials, it becomes possible to provide a desired stiffness ratio of the flow-enhancing layers 13 to the fibre reinforcement layers 19 after curing the resin.

Throughout the description the wetting of the fibre reinforcement layers means a wetting to a desired degree which is sufficient for the desired application of the product produced with the method. The degree of wetting may therefore vary from partially wetting the fibre reinforcement layers up to fully wetting the fibre reinforcement layers, depending on the laminated structure which is to be formed.

Although a pre-cured woven mat has been described as an example for the flow enhancing layer, other pre-cured meshed structures, with or without corrugation, may be used instead.

In the inventive method, the infusion of resin is facilitated, in particular for thick stacks of fibre reinforcement layers, by using flow-enhancing layers between stacks of fibre reinforcement layers. This allows the manufacture of thicker laminates and thus, enables the manufacture of larger structural integrated laminated structures.

## Claims

1. A method of producing a wind turbine rotor blade (1) as a fibre reinforced laminated structures (1) by layering a number of dry fibre reinforcement layers (19) by placing them on top of each other in a mould (17), infusing a curable viscous or liquid polymer into the mould (17) after the fibre reinforcement layers (19) have been layered in the mould (17) and curing the polymer, wherein a flow enhancing layer (13) for enhancing the polymer flow during infusion of the polymer is placed between two fibre reinforcement layers (19) when layering the number of dry fibre reinforcement layers (19)
**characterised in that**
- the wind turbine rotor blade is made of an upper shell (3) and a lower shell (5) each comprising a thickened section (9) and a non-thickened sections (11),
- where the flow enhancing layers (13) are present between stacks of fibre reinforced layers in the thickened section (9), and
- a pre-cured solid layer is used as the flow enhancing layer (13).

2. The method as claimed in claim 1,
**characterised in that**
a perforated layer is used as the flow enhancing layer (13).

3. The method as claimed in claim 2,
**characterised in that**
the same material as the material of the fibre reinforcement layers (19) is used as layer material of the flow enhancing layer (13).

4. The method as claimed in any of the claim 1 to 3,
**characterised in that**
a stack (15) comprising a number of fibre reinforcement layers (19) is built up, then at least one flow enhancing layer (13) is placed on top of the stack (15) when layering the number of dry fibre reinforcement layers (19).

5. The method as claimed in claim 4,
**characterised in that**
a number of stacks (15) and a number of flow enhancing layers (13) are layered such that stacks (15) and flow enhancing layers (13) alternate.

6. The method as claimed in any of the preceding claims,
**characterised in that**
a flow enhancing layer (13) is placed as the lowermost layer and/or a flow enhancing layer is placed as the uppermost layer of the layered structure in the mould (17).

## Patentansprüche

1. Verfahren zur Herstellung einer Windturbinenschaufel (1) als faserverstärkte Laminatstrukturen (1) durch Übereinanderschichten einer Mehrzahl von trockenen Faserverstärkungsschichten (19), indem diese übereinander in einer Gussform (17) angeordnet werden, ein aushärtbares dickflüssiges oder flüssiges Polymer in die Gussform (17) gegossen wird, nachdem die Faserverstärkungsschichten (19) in die Gussform (17) geschichtet worden sind, und das Polymer ausgehärtet wird, wobei eine Flussverbesserungsschicht (13), die das Fließen des Polymers beim Eingießen des Polymers verbessert, zwischen zwei Faserverstärkungsschichten (19) angeordnet wird, wenn die Mehrzahl von trockenen Faserverstärkungsschichten (19) geschichtet wird,
**dadurch gekennzeichnet, dass**
- die Windturbinenschaufel aus einer oberen Halbschale (3) und einer unteren Halbschale (5) zusammengesetzt ist, die beide einen verdickten Abschnitt (9) und nicht verdickte Abschnitte (11) umfassen,
- wobei die Flussverbesserungsschichten (13) zwischen Stapeln von Faserverstärkungsschichten in dem verdickten Abschnitt (9) enthalten sind, und
- eine vorgehärtete massive Schicht als Flussverbesserungsschicht (13) eingesetzt wird.

2. Verfahren gemäß Anspruch 1,
**dadurch gekennzeichnet, dass**
eine perforierte Schicht als Flussverbesserungsschicht (13) eingesetzt wird.

3. Verfahren gemäß Anspruch 2,
**dadurch gekennzeichnet, dass**
dasselbe Material wie das Material der Faserverstärkungsschichten (19) als Schichtmaterial für die Flussverbesserungsschicht (13) verwendet wird.

4. Verfahren gemäß einem der Ansprüche 1 bis 3,
**dadurch gekennzeichnet, dass**
ein Stapel (15), der eine Mehrzahl von Faserverstärkungsschichten (19) umfasst, aufgebaut wird und danach mindestens eine Flussverbesserungsschicht (13) oben auf dem Stapel (15) angeordnet wird, wenn die Mehrzahl von trockenen Faserverstärkungsschichten (19) geschichtet wird.

5. Verfahren gemäß Anspruch 4,
**dadurch gekennzeichnet, dass**
eine Mehrzahl von Stapeln (15) und eine Mehrzahl von Flussverbesserungsschichten (13) derart geschichtet werden, dass Stapel (15) und Flussverbesserungsschichten (13) miteinander abwechseln.

6. Verfahren gemäß einem der vorstehenden Ansprüche,
**dadurch gekennzeichnet, dass**
eine Flussverbesserungsschicht (13) als unterste Schicht angeordnet wird und/oder dass eine Flussverbesserungsschicht als die oberste Schicht der geschichteten Struktur in der Gussform (17) angeordnet wird.

## Revendications

1. Procédé de production d'une pale de rotor d'éolienne (1) sous la forme d'une structure stratifiée renforcée par fibres (1) en déposant en couches un certain nombre de couches de renfort fibreuses (19) sèches en les plaçant l'une par-dessus l'autre dans un moule (17), en instillant un polymère durcissable visqueux ou liquide dans le moule (17) après que les couches de renfort fibreuses (19) ont été déposées en couches dans le moule (17) et en durcissant le polymère, dans lequel une couche d'amélioration d'écoulement (13) pour améliorer l'écoulement du polymère pendant l'instillation du polymère est placée entre deux couches de renfort fibreuses (19) lors du dépôt du certain nombre de couches de renfort fibreuses (19), **caractérisé en ce que**
- la pale de rotor d'éolienne est constituée d'une coque supérieure (3) et d'une coque inférieure (5) comprenant chacune une section épaissie (9) et une section non épaissie (11),
- où les couches d'amélioration d'écoulement (13) sont présentes entre des piles de couches renforcées avec une fibre dans la section épaissie (9), et
- une couche solide pré-durcie est utilisée comme la couche d'amélioration d'écoulement (13).

2. Procédé selon la revendication 1,
**caractérisé en ce que**
une couche perforée est utilisée comme la couche d'amélioration d'écoulement (13).

3. Procédé selon la revendication 2,
**caractérisé en ce que**
la même matière que la matière des couches de renfort fibreuses (19) est utilisée comme matière de couche de la couche d'amélioration d'écoulement (13).

4. Procédé selon l'une quelconque des revendications 1 à 3,
**caractérisé en ce que**
une pile (15) comprenant un certain nombre de couches de renfort fibreuses (19) est constituée, ensuite au moins une couche d'amélioration d'écoulement (13) est placée par-dessus la pile (15) lors du dépôt en couches du certain nombre de couches de renfort fibreuses (19) sèches.

5. Procédé selon la revendication 4,
**caractérisé en ce que**
un certain nombre de piles (15) et un certain nombre de couches d'amélioration d'écoulement (13) sont déposées en couches de telle sorte que des piles (15) et des couches d'amélioration d'écoulement (13) sont alternées.

6. Procédé selon l'une quelconque des revendications précédentes,
**caractérisé en ce que**
une couche d'amélioration d'écoulement (13) est placée comme la couche la plus inférieure et/ou une couche d'amélioration d'écoulement est placée comme la couche la plus supérieure de la structure stratifiée dans le moule (17).
